# EUROPEAN PATENT APPLICATION

(11) **EP 2 521 328 A2**
(43) Date of publication of application: **07.11.2012**
(21) Application number: 12156063.5
(22) Date of filing: 17.02.2012
(51) Int. Cl.: H04L 12/58

(54) **Dedicated message channel**

(30) Priority: 17.02.2011 US 201161443929 P
(71) Applicant: Prolifiq Software Inc., Beaverton, OR 97005 (US)
(72) Inventor: Huynh, Hemingway, Beaverton, OR Oregon 97005 (US); Huynh, Anh, Beaverton, OR Oregon 97005 (US); Farnsworth, Jeffrey Michael, Beaverton, OR Oregon 97005 (US)
(74) Representative: Moore, Barry

(57) **Abstract**

Embodiments of the present disclosure provide systems, methods, and apparatuses for providing secure, dedicated, one-to-one communication between content providers and interested participants. In embodiments, a dedicated message channel platform may provide content generators with the ability to send recipient-specific messages to recipients, such as by using a dedicated message application installed on communication device under control of the recipient, such as a smartphone. The dedicated message channel may also be used to facilitate communication between a third party and a message recipient through a content generator facilitating the third-party communication. In embodiments, messages may be used for communications between a physician and a pharmaceutical sales representative.

## Description

### FIELD

Embodiments of the present invention relate generally to the field of electronic messaging, and in particular to provision and facilitation of dedicated message channels.

### BACKGROUND

Existing electronic communication methods allow content generators to send their content to one or more potential recipients. Examples of such communication methods include, for example, web-based content broadcasting and blogging, API-based messaging, including microblogging services, email, and text messaging.

Unfortunately, these methods provide some disadvantages. When attempting to communicate an important message to a recipient, broadcast-style communication methods, such as web-based API-based blogs, may require action on the part of a recipient to gain the recipient's attention. Additionally, it can be difficult to tailor a message to a particular recipient, as all messages from the content provider may come through a common channel.

Other methods, such as email, or API-based microblogging services like Twitter, typically result in a content generator's messaging being aggregated with many other providers' messages. For example, if a pharmaceutical sales representative is interested in communicating with a busy physician via email, that email message will have to fight for the physician's attention along with every other email message she receives in a day. This is true no matter how much the message is personally-tailored.

Additionally, existing electronic communication methods do not necessarily provide as extensive a level of control as a content generator may wish to utilize. For example, in certain industries, such as communications with physicians, regulations may require that communications be limited to particular circumstances and/or that all communications be recorded or monitored. Existing methods, including email, may not require the level of tracking and/or monitoring that a content provider may desire.

### DETAILED DESCRIPTION

The foregoing and other features of the present disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through the use of the accompanying drawings, in which:

Fig. 1 illustrates a block diagram showing example usage and information flow of a computer-implemented dedicated message channel coordinator and dedicated message application in accordance with various embodiments;

Fig. 2 illustrates an example interface generated by the dedicated message application in accordance with various embodiments;

Fig. 3 is a flowchart illustrating an example process for setting up and communicating through a dedicated message channel between with a recipient in accordance with various embodiments;

Fig. 4 is a flowchart illustrating an example process wherein a content generator may facilitate a communication over a dedicated message channel between a recipient and a third party in accordance with various embodiments; and

Fig.5 illustrates an example computing environment configured to practice various aspects of the earlier described methods and systems.

### DETAILED DESCRIPTION

Embodiments of the present disclosure provide systems, methods, and apparatuses for providing secure, dedicated, one-to-one communication between content providers and interested participants. For example, a dedicated message channel platform may provide content generators with the ability to send recipient-specific messages to recipients, such as by using a dedicated message application installed on communication device under control of the recipient, such as a smartphone. The dedicated message channel may also be used to facilitate communication between a third party and a message recipient through a content generator facilitating the third-party communication.

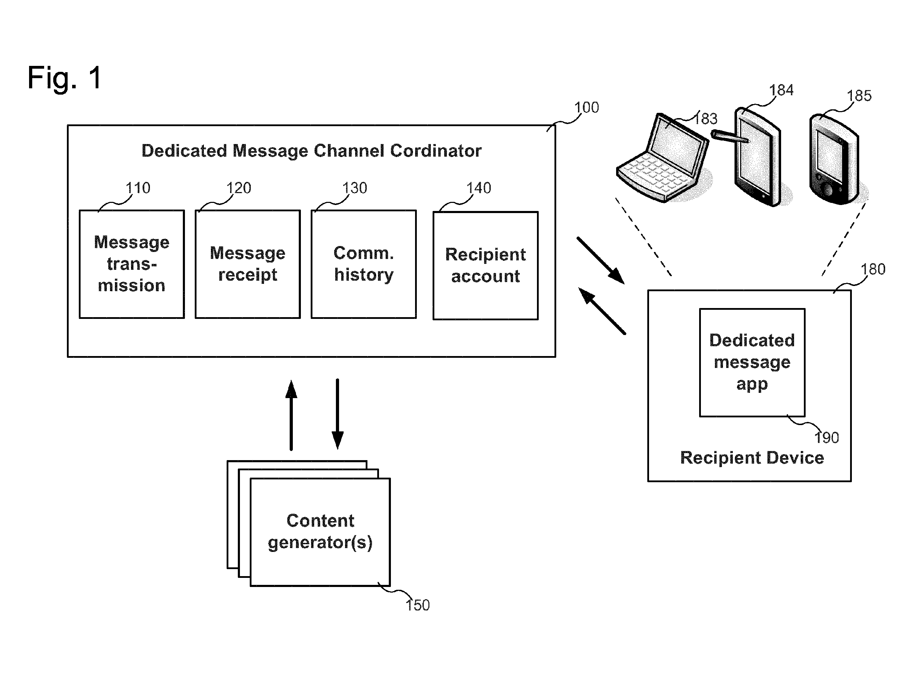

Figure 1 illustrates a dedicated message channel system in accordance with some embodiments. The dedicated message channel system may comprise a dedicated message channel coordinator 100, which works to coordinate communications between one or more content generator(s) 150 and a message recipient, such as through a recipient device 180. In various embodiments, the content generator(s) 150 may comprise individuals and/or group enterprises. In various embodiments, the recipient device 180 may comprise one of various types of electronic communications devices, such as, for example, a personal (laptop) computer 183, a tablet computer 184, and/or a smartphone 185.

In various embodiments, the dedicated message channel coordinator 100 may send and receive messages with a dedicated message application 190 executing on the recipient device. In various embodiments, the dedicated message application may be installed on the recipient device as an application and/or as a mobile app, or may take the form of a web-based application. In various embodiments, the dedicated message application 190 may authenticate a recipient's identity with the dedicated message channel coordinator 100. By doing so, the dedicated message application 190 and dedicated message channel coordinator 100 may help generate an authenticated and trusted dedicated message channel through which sensitive and/or regulated messages may be transmitted. In various embodiments, the dedicated message channel may be bi-directional. As such, messages may flow not only from the content generator to the recipient, but from the recipient to the content generator as well. Using this bi-directional channel, a recipient may be facilitated in participating in an ongoing back-and-forth discourse with the content generator.

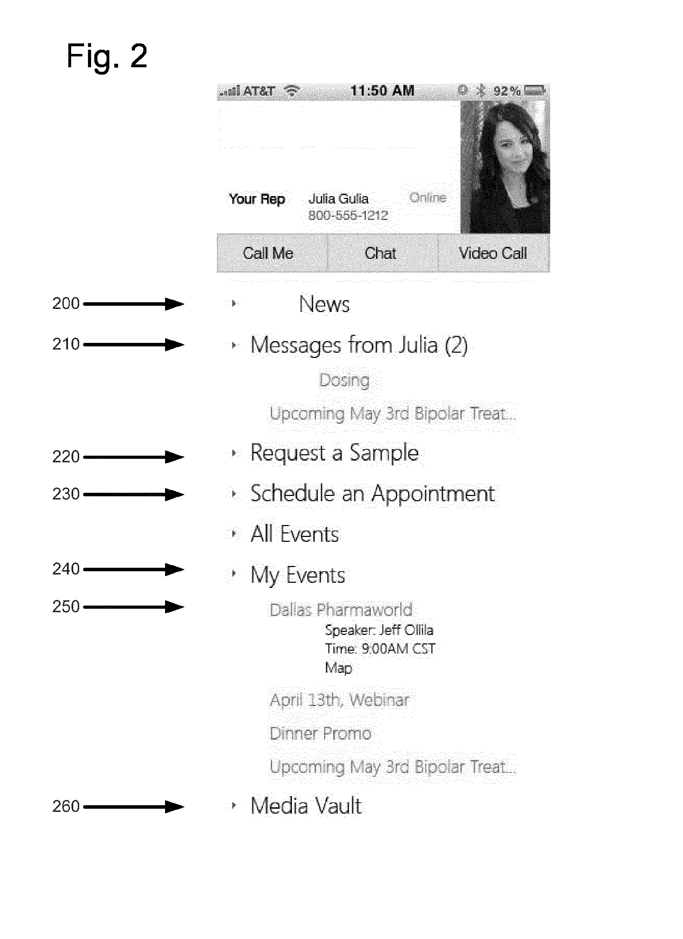

Figure 2 illustrates an example interface generated by the dedicated message application 190 for a message recipient to communicate over the dedicate message channel. In the illustrated example, the dedicated message application 190 is used for communications between a physician and a pharmaceutical sales representative. While particular elements are illustrated or discussed herein, in alternative embodiments, interfaces may comprise additional elements or may omit one or more illustrated elements. In various embodiments, all or parts of the information displayed in the interface may be selected by the content generator to provide detailed and personalized information for the message recipient.

Figure 2 illustrates a News element 200, though which the message recipient may receive news items of personal interest to himself or herself. Element 200 comprises a listing a messages from the sales representative, which may be transmitted over the secure dedicated message channel as described below. Elements 220 and 230 illustrate examples wherein the message recipient may communicate back to the sales representative over the bi-directional channel, such as to request a drug sample (220), or to schedule an appointment with the sale representative (230). At element 240, the message recipient may view various events he or she may wish to attend, such as the "Dallas Pharmaworld" event 250. Finally, element 260 illustrates a link to see additional forms of media, which may be selected, in whole or in part, by the content generator to be personalized for the message recipient.

Returning to Figure 1, in various embodiments, the dedicated message channel coordinator 100 may comprise one or more modules, such as a message transmission module 110, a message receipt module 120, a communication history module 130, and/or a recipient account module 140. In various embodiments, the message transmission module 110 may serve to maintain connections with one or more dedicated message applications 190 on various recipient devices 180 and to send messages received from content generators (such as by the message receipt module 120) to the dedicated message applications 190. In another embodiment, the message transmission module 110 may send messages received by the message receipt module 120 to the one or more content generator(s) 150.

In various embodiments, the communication history module 130 may maintain a communication history between recipients and content generator(s) 150. In various embodiments, the communication history module 130 may provide a visual interface for viewing a communication history. In various embodiments, said viewing may be performed by a content generator 150, a recipient, and/or by an entity in control of the dedicated message channel coordinator 100. In various embodiments, the interface may be provided over a dedicated application, such as via the dedicated message application 190, or, alternatively, through a web-based interface. In various embodiments, the communication history module 130 may also maintain additional non-message information, such as event information, including events that a recipient has attended or will likely attend, or recordation of particular sensitive communications. For example, the communication history module may maintain information on communications that need to be recorded between a pharmaceutical sales representative and a physician for record keeping or future auditing.

In various embodiments, the recipient account module 140 may maintain account information about message recipients, such as, for example, account names, passwords, names, addresses, phone information, and/or other information which relates to particular recipients. In various embodiments, the recipient account module may provide authentication services for a content generator and/or a recipient to authenticate their identities when seeking to communicate through a dedicated message channel.

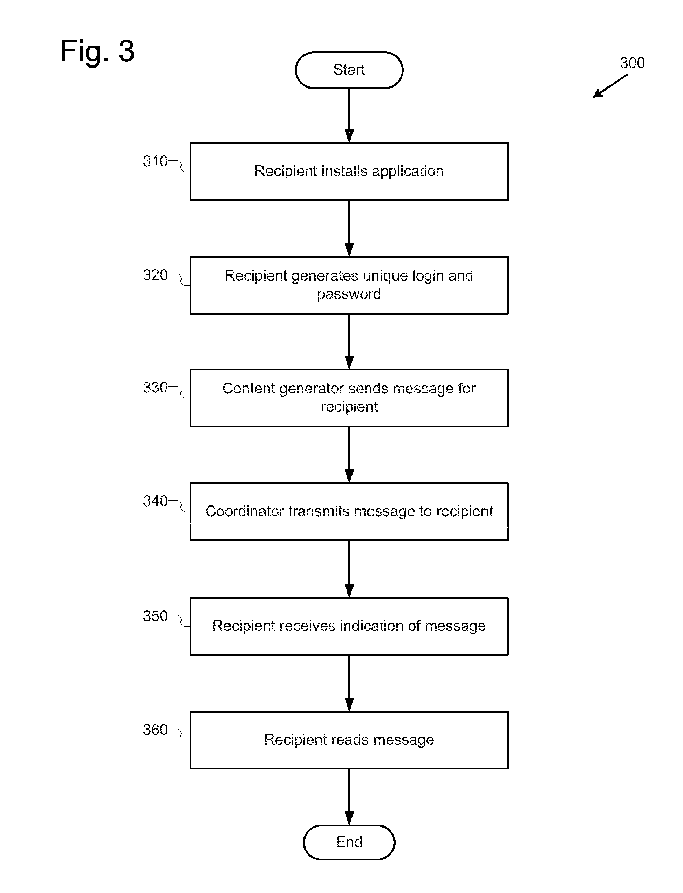

Figure 3 is a flowchart illustrating an example process for setting up and communicating through a dedicated message channel between with a recipient. The process may begin at operation 310, where a recipient may install the dedicated messaging application 190 on his or her device. At operation 320, the recipient may generate a unique login and password to identify himself or herself when using the dedicated messaging channel. In various embodiments, the recipient may generate the login and/or password using an interface of the dedicated messaging application 190, or through another interface, such as a web-based interface provided by the dedicated message channel coordinator 100.

At operation 330, the content generator may send a message for receipt by the recipient. In various embodiments, the message may be sent to the dedicated message channel coordinator 100 through various electronic messaging protocols or systems, as may be understood. As used herein messages may be any of a variety of message types including, but not limited to, a text message, a multimedia message, an electronic mail (e-mail), a file (either coupled to one of the earlier described message types or transferred independently), e.g., an extensible markup language (XML) file, a hypertext markup language (HTML), a message displayed in a mobile application, and the like. In alternative embodiments, the dedicated message channel coordinator 100 may receive the message through a dedicated messaging application programming interface (API), or may provide a graphical interface for generating the message directly at the dedicated message channel coordinator 100.

In various embodiments, the message may be generated from scratch by the content generator or may be generated from one or more pre-determined message templates. In some communication scenarios, such as when communicating about regulated medical information, messages may require review for regulatory compliance with standards before they can be sent. Thus, in some embodiments, the pre-determined message templates may have been reviewed before being made available to content generators. In other embodiments, the message, after being generated, may undergo a review process coordinated by the dedicated message channel coordinator 100 before it may be transmitted to the message recipient.

At operation 340, the dedicated message channel coordinator 100 may then transmit the message to the dedicated messaging application 190. In various embodiments, the dedicated message channel coordinator 100 may translate the message into a predefined format for interpretation by the dedicated messaging application 190. In alternative embodiments, such as when the message has been indicated as not a personalized one or as not sensitive, the dedicated message channel coordinator 100 may send the message through another protocol or system, such as via email or through another service.

At operation 350, the recipient may receive an indication that he or she has received a message. In various embodiments, the indication may be an indication directly from the dedicated messaging application 190 or may be delivered by an intermediary notification service. In various embodiments, the notification may precede the transmission of the message to the dedicated messaging application 190, such as if the dedicated messaging application 190 pulls the message from the dedicated message channel coordinator 100 after the notification is received. At operation 360, the recipient may read the transmitted message. In various embodiments, a confirmation may be received from the message recipient after reading. In some embodiments, confirmation may be simply that a message was read. In other embodiments, confirmation may indicate a type of communication that was transmitted or all or part of the substance of the communication. In some embodiments, confirmation may comprise an indication that the message recipient will take particular action, such as that the message recipient will attend an event.

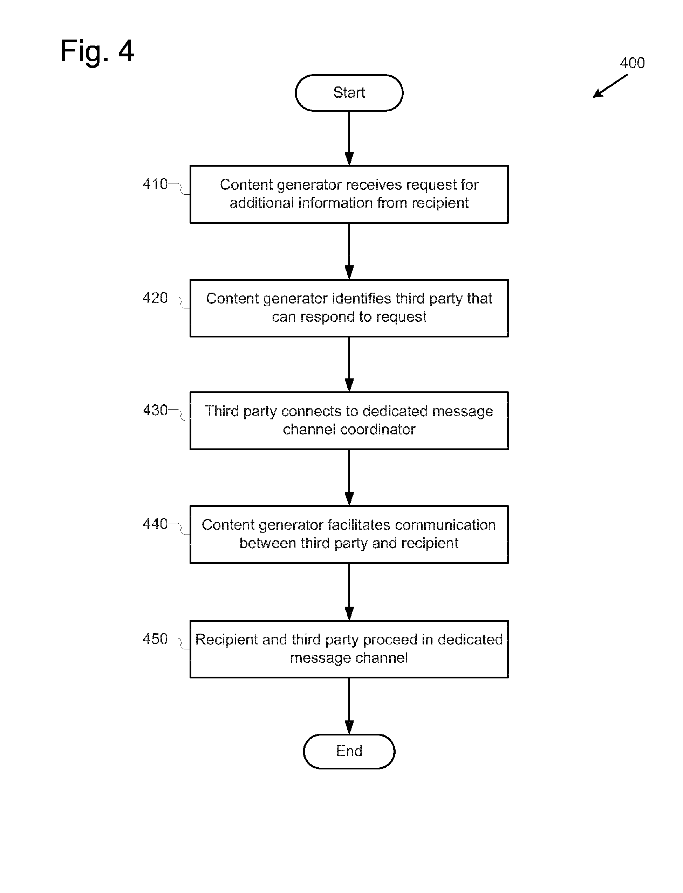

Figure 4 is a flowchart illustrating an example process wherein a content generator may facilitate a communication over a dedicated message channel between a recipient and a third party. In one embodiment, this process may be used when the content of communications between a content generator and a recipient is regulated or otherwise cannot be performed by the content generator. For example, a pharmaceutical sales representative, when discussing a drug with a physician, may be asked by the physician about a potential off-label usage. Oftentimes, the sales representative may not be allowed to partake in further communications after this inquiry, but must instead refer that physician to a medical specialist for further discussion. Using this process, the dedicate message channel may be utilized for these further communications.

The process may begin at operation 410, where the content generator receives a request for additional information from a message recipient, such as, for example, in the scenario discussed above. At operation 420, the content generator identifies a third party, such as a medical specialist, who can respond to the request for information. Next, at operation 430, the third party connects to the dedicated message channel coordinator 100 to participate in the dedicate message channel.

At operation 440, the content generator facilitates an initiation of communication between the third party and the message recipient. In various embodiments, the facilitated communication may take place over the same dedicated messaging application 190 as used during communication between the message recipient and the content generator. In some embodiments, the facilitation may comprise the content generator pre-populating a message history for the message recipient and the third party so that they have a common understanding of what they are discussing. Finally, at operation 450, the message recipient and the third party may proceed with their communication using the dedicate message channel.

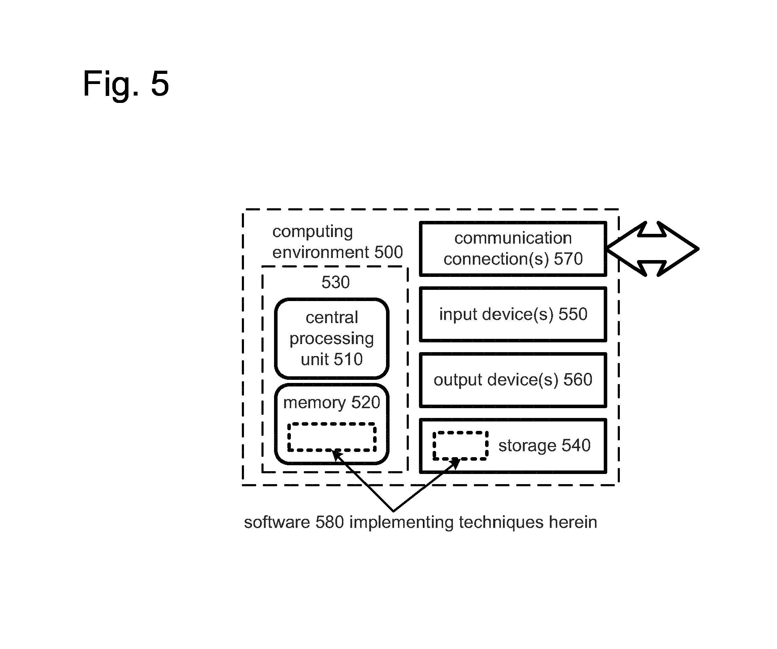

Figure 5 illustrates a generalized example of a suitable computing environment 500 in which several of the described embodiments may be implemented. The computing environment 500 is not intended to suggest any limitation as to scope of use or functionality, as the techniques and tools may be implemented in diverse general-purpose or special-purpose computing environments such as personal computers, consumer electronic devices, and the like.

With reference to Figure 5, the computing environment 500 includes at least one CPU 510 and associated memory 520. In Figure 5, this most basic configuration 530 is included within a dashed line. The processing unit 510 executes computer-executable instructions and may be a real or a virtual processor. In a multi-processing system, multiple processing units execute computer-executable instructions to increase processing power. The memory 520 may be volatile memory (e.g., registers, cache, RAM), non-volatile memory (e.g., ROM, EEPROM, flash memory, etc.), or some combination of the two. The memory 520 stores software 580 implementing the techniques described herein.

A computing environment may have additional features. For example, the computing environment 500 includes storage 540, one or more input devices 550, one or more output devices 560, and one or more communication connections 570. An interconnection mechanism (not shown) such as a bus, controller, or network interconnects the components of the computing environment 500. Typically, operating system software (not shown) provides an operating environment for other software executing in the computing environment 500, and coordinates activities of the components of the computing environment 500.

The storage 540 may be removable or non-removable, and includes magnetic disks, magnetic tapes or cassettes, CD-ROMs, DVDs, flash drives, disk arrays, or any other medium which can be used to store information and which can be accessed within the computing environment 500. The storage 540 stores instructions for the software.

The input device(s) 550 may be a touch input device such as a keyboard, mouse, pen, or trackball, a voice input device, a scanning device, or another device that provides input to the computing environment 500. For audio or video encoding, the input device(s) 550 may be a sound card, video card, TV tuner card, or similar device that accepts audio or video input in analog or digital form, or a CD- or DVD-based drive that reads audio or video samples into the computing environment 500. The output device(s) 560 may be a display (e.g., monitor, display screen, or the like), printer, speaker, DVD-writer, or another device that provides output from the computing environment 500.

The communication connection(s) 570 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media include wired or wireless techniques implemented with an electrical, optical, RF, infrared, acoustic, or other carrier.

The techniques and tools can be described in the general context of non-transitory computer-readable media. Computer-readable media are any available media that can be accessed within a computing environment. By way of example, and not limitation, with the computing environment 500, computer-readable media include memory 520, computer-readable storage media 540 (e.g., CDs, DVDs, diskettes, flash drives, removable hard drives, hard drive arrays), and combinations of any of the above.

The techniques and tools can be described in the general context of computer-executable instructions, such as those included in program modules, being executed in a computing environment on a target real or virtual processor. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing environment.

Although certain embodiments have been illustrated and described herein, it will be appreciated by those of ordinary skill in the art that a wide variety of alternate and/or equivalent embodiments or implementations calculated to achieve the same purposes may be substituted for the embodiments shown and described without departing from the scope of the present invention. Those with skill in the art will readily appreciate that embodiments in accordance with the present invention may be implemented in a very wide variety of ways. This application is intended to cover any adaptations or variations of the embodiments discussed herein. Therefore, it is manifestly intended that embodiments in accordance with the present invention be limited only by the claims and the equivalents thereof.

The embodiments described herein provide for the ability to create a secure, dedicated message channel for a message recipient; facilitate generation of messages by a content generator for the message recipient; transmit generated messages to a recipient over the dedicated message channel; provide an application to facilitate the dedicated message channel; facilitate bi-directional communication over the dedicated message channel; facilitate communication between a third party and the message recipient; and track and record history of communications between a message recipient and one or more parties.

Other embodiments may also be disclosed and described.

## Claims

1. A computer-implemented method for sharing information with a recipient, the method comprising:
establishing, by a first computing device, a remote network connection with a dedicated content application operating on a second computing device; and
sending, by the first computing device, a piece of content to the second computing device via the remote network connection;
wherein:
the piece of content is configured to be presented to a user of the second computing device via the dedicated content application; and
the dedicated content application is configured to restrict display of content to content sent by specified content generators.

2. The method of claim 1, wherein the piece of content comprises at least one of:
a message, an image, event information.

3. The method of any preceding claim, wherein the dedicated content application comprises a native application executing on the second computing device or a web application.

4. The method of any preceding claim, further comprising facilitating, by the first computing device, one of the specified content generators in generating the piece of content.

5. The method of any preceding claim, further comprising receiving, by the first computing device, the piece of content from one of the specified content generators.

6. The method of any preceding claim, further comprising receiving a message from the user of the second device via the established remote network connection, and
Optionally further comprising:
receiving, at the first computing device, a request from the user to communicate with a third party; and
facilitating, by the first computing device, communication between the third party and the user of the second device via the established remote network connection.

7. The method of claim 6, wherein facilitating comprises:
receiving messages from the third party to be sent to the user of the second device;
sending the received messages from the third party to the user of the second device receiving messages from the user of the second device to be sent to the third party; and
sending the received messages from user of the second device to the third party.

8. An apparatus for sharing information with a recipient, the apparatus comprising:
one or more computer processors;
a message transmission module configured, in response to operation on the one or more computer processors, to:
receive a message from a content generator; and
send the received message to a dedicated content application of a recipient device, the recipient device configured to restrict display of content to content sent by one or more content generators including the content generator.

9. The apparatus of claim 8, wherein the message transmission module is further configured to, in response to operation on the one or more computer processors:
a) receive a message from the user of the recipient device for the content generator; and
send the received message from the user to the content generator,
or
b) receive a request from the user of the recipient device for the user to receive content from a third party;
receive an identification of the third party from the content generator; and
facilitate message transmission between the user of the recipient device and the third party.

10. The apparatus of claim 8, further comprising a recipient account module configured to, in response to operation on the computer processor:
maintain account information for the user of the recipient device; and
authenticate the identity of the user of the recipient device before the message transmission module sends the received message to the user of the recipient device.

11. One or more computer-readable media comprising instructions that, in response to execution on a computing device, cause the computing device to:
receive a message from a content generator;
establish a remote network connection with a dedicated content application operating on a recipient device and
send the received message via the established remote network connection to the recipient device to be presented to a user of a recipient device via the dedicated content application on the recipient device;
wherein the dedicated content application is configured to restrict display of content to content sent by the content generator.

12. The computer-readable media of claim 11, wherein the instructions are further configured to, in response to execution on the computing device effect one or more of
a) receive a message via the established remote network connection from the user of the recipient device for the content generator; and
send the received message from the user to the content generator,
or
b) receive a request from the user of the recipient device for the user to receive content from a third party;
receive an identification of the third party from the content generator; and
facilitate message transmission via the established remote network connection between the user of the recipient device and the third party,
or
c) maintain account information for the user of the recipient device; and
authenticate the identity of the user of the recipient device before the message transmission module sends the received message to the user of the recipient device.

13. One or more computer-readable media comprising instructions that, in response to execution on a first computing device, cause the first computing device to:
authenticate an identity of a user of the first computing device with a second computing device;
receive, from the second computing device, one or more messages, the one or more messages generated by one or more specified content generators; and
present the one or more received messages to the user of the first computing device, and optionally wherein the instructions are further configured to, in response to execution on the first computing device:
receive a request from the user of the first computing device to communicate with a third party;
send the received request to the content generator; and
send and receive messages between the user of the first computing device and the third party.

14. The computer-readable media of claim 13, wherein the instructions are further configured to, in response to execution on the first computing device, effect one or more of:
display scheduled events for the user of the first computing device;
facilitate scheduling of an event with one of the content generators;
display an indication that the one or more messages have been received prior to presenting the one or more messages to the user of the first computing device;
display an interface for receiving content selections from the user and for displaying selected content.

15. The computer-readable media of claim 13, wherein the instructions are further configured to, in response to execution on the first computing device, display an interface for receiving content selections from the user and for displaying selected content and, in response to execution on the first computing device, display an indication of the content generator.
